# EUROPEAN PATENT APPLICATION

(11) **EP 4 386 215 A1**
(43) Date of publication of application: **19.06.2024**
(21) Application number: 22306851.1
(22) Date of filing: 12.12.2022
(51) Int. Cl.: F16B 5/02, F16B 37/06, H05K 7/14, H01R 12/91

(54) **ASSEMBLY PART, METHOD OF ASSEMBLING AN ASSEMBLY PART AND FASTENING INSERT**

(71) Applicant: CONNECTEURS ELECTRIQUES DEUTSCH, 27000 Evreux CEDEX 09 (FR)
(72) Inventor: HOUVENAGHEL, Fabien, Evreux (FR); DUVAL, Frederic, Evreux (FR)
(74) Representative: Grünecker Patent- und Rechtsanwälte PartG mbB

(57) **Abstract**

The present invention relates to an assembly part configured to be fastened to a counterpart, comprising a body (101) traversed by a traversing hole (107), and a fastening insert (1) configured to receive a fastening means (200) along a first direction (F) for the fastening of the assembly part (100) to the counterpart (300), the fastening insert (1) comprising, in the first direction (F), a proximal end portion (7) and a distal end portion (11). The fastening insert (1) is positioned in the traversing hole (107) such that: a movement of the fastening insert (1) in a second direction (S) opposed to the first direction (F) is blocked by a first form fit (FF1) between the distal end portion (11) and the body (101); and a movement of the fastening insert (1) in the first direction (F) is blocked by a second form fit (FF2) between the proximal end portion (7) and the body (101). The invention further relates to a method of assembling an assembly part, to a method of fastening the assembly part to a counterpart, and to a fastening insert suitable for the assembly part.

## Description

The present invention relates to an assembly part configured to be fastened to a counterpart, to a method of assembling an assembly part, and to a method of fastening the assembly part to a counterpart. The present invention further relates to a fastening insert suitable for the assembly part.

It is known in the art to fasten an assembly part to a counterpart by using a screw or alike, in conjunction with a threaded fastening insert present in the assembly part. For this purpose, the fastening insert of the assembly part is aligned with a through hole in a counterpart. To operate the fastening, the screw is passed through the through hole of the counterpart and fixed by the thread of the fastening insert of the assembly part.

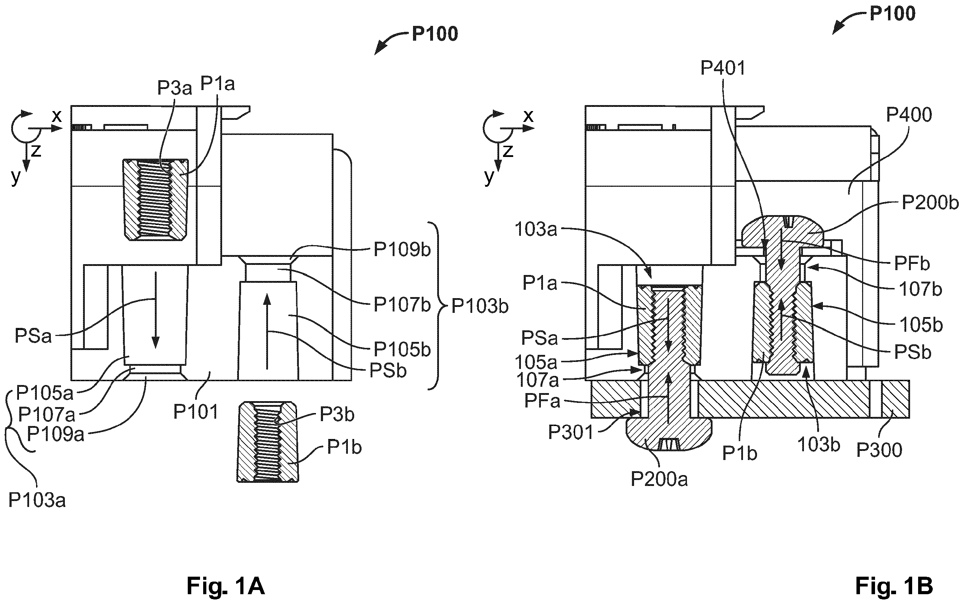

A typical assembly part known in the art will be described with reference to Figures 1A and 1B. Figure 1A shows a cross-sectional view of prior art fastening inserts P1a, P1b before their assembly with an exemplary body P101 of an assembly part P100. The body P101 is provided with two traversing holes P103a, P103b.The two fastening inserts P1a, P1b are positioned facing the traversing holes P103a, P103b, but are not yet inserted. Each one of the holes P103a, P103b has, in respective secondary directions PSa, PSb, a conic primary section P105a, P105b, a narrowed ledge section P107a, P107b, and a chamfered opening section P109a, P109b.

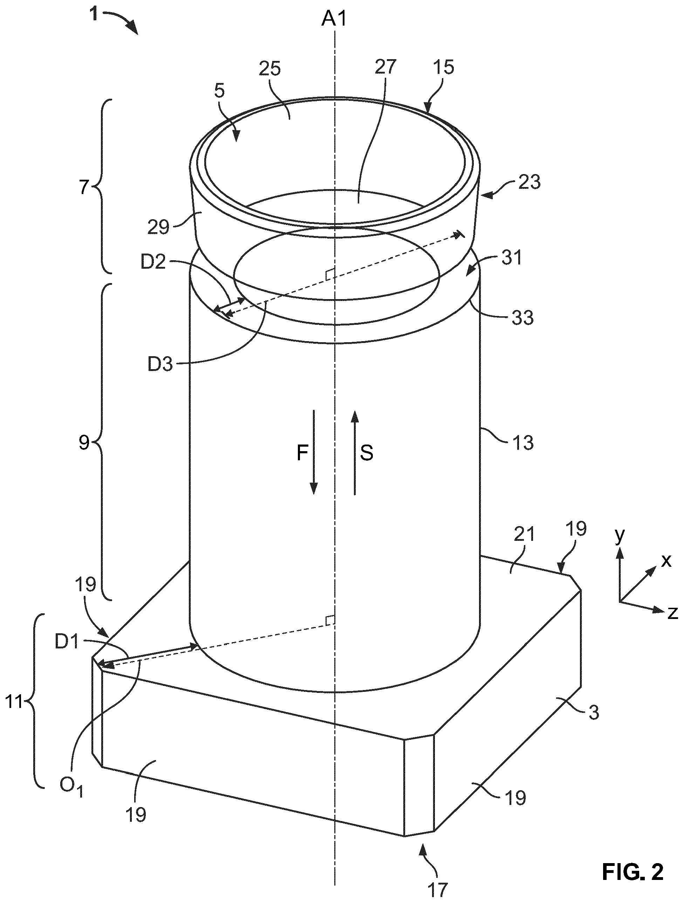

The traversing holes P103a, P103b formed in the body P101 have opposed respective secondary directions PSa, PSb and differing lengths. The fastening inserts P1a, P1b have a conic shape, as known for example from Morse-type machine tapers, matching the primary conic sections P105a, P105b. The fastening inserts P1a, P1b are configured as nuts for corresponding bolts P200a, P200b, shown in Figure 2B, and thus comprise an internal thread P3a, P3b.

Figure 1B shows the cross-sectional view of Figure 1A, in which the assembly part P100 is assembled and fastened to a first counterpart P300 and to a second counterpart P400. Specifically, the fastening inserts P1a, P1b have been inserted in the corresponding traversing holes P103a, P103b along their respective secondary directions PSa, PSb, into the primary conic sections P105a, P105b until they are blocked by the narrowed sections P107a, P107b, obtaining an assembly part P100 ready to be fastened. Subsequently, the first counterpart P300 and the second counterpart P400 have each, separately, been fastened to the assembly part P100 by respective bolts P200a, P200b passed through the through holes P301, P401 and screwed in respective primary directions PFa, PFb opposed to the secondary directions PSa, PSb.

To obtain the assembly part P1, the dimensions of the fastening inserts P1a, P1b are selected to achieve a friction fit that firmly holds the fastening inserts P1a, P1b in the traversing holes P103a, P103b. Thus, on the one hand, if the fastening inserts P1a, P1b are dimensioned too small, they risk falling back out of the holes P103a, P103b in the primary directions PFa, PFb. On the other hand, if the fastening inserts P1a, P1b are too large, they risk being damaged or damaging the body P3 during insertion, or risk not being correctly insertable in the traversing holes P105a, P105b. It appears, however, that due to manufacturing tolerances or the use of varying production processes, the outlined dimensional requirements of the various parts cannot be guaranteed, leading to problems during assembly.

In view of the above, it is an object of the present invention to provide a solution for the fastening of an assembly part to a counterpart that overcomes the above-outlined drawbacks.

This object is achieved with an assembly part configured to be fastened to a counterpart, the assembly part comprising a body traversed by a traversing hole, and a fastening insert configured to receive a fastening means in a hollow of the fastening insert along a first direction for the fastening of the assembly part to the counterpart, the fastening insert comprising, in the first direction, a proximal end portion and a distal end portion,

The assembly part is characterized in that the fastening insert is positioned in the traversing hole such that: a movement of the fastening insert in a second direction opposed to the first direction is blocked by a first form fit between the distal end portion and the body; and a movement of the fastening insert in the first direction is blocked by a second form fit between the proximal end portion and the body.

In a thus configured assembly part, a movement of the fastening insert positioned in the traversing hole with respect to the body is blocked in two respectively opposing directions by respective form fits. Thus, the fastening insert is prevented from falling out from the hole and is securely attached to the body without resorting to a friction fit in the traversing hole. By providing the form fits in the end portions of the fastening insert, the fastening insert can be dimensioned so as to have sufficient clearance when positioned in the traversing hole, preventing damage when the fastening insert is inserted, both to the fastening insert and to the body defining the traversing hole.

As a corollary advantage, since the traversing hole is no longer required to have a precise structure enabling a friction fit, the manufacture of said hole is also simplified, increasing cost-efficiency of the assembly part.

In addition, as the first form fit and the second form fit only block movement along the two opposing directions, lateral movements, for example movements in directions orthogonal to the second direction, remain possible. Thus, in contrast to a friction fit solution such as the one described in the background section above, the present assembly part allows for additional centring, or adjusting, of the lateral positioning of the fastening insert in the traversing hole, with respect to a through hole in a counterpart. This can facilitate a mating of the fastening means and the fastening insert, for example the screwing of a screw or bolt in the fastening insert.

In one aspect of the inventive assembly part, the fastening insert can be positioned in the traversing hole such that a rotational movement of the fastening insert around the first direction is blocked by a third form fit between the proximal end portion and/or the distal end portion and a corresponding mating portion of the body.

The third form fit blocks a rotational movement of the fastening insert and thus, when the fastening insert is positioned in the traversing hole, the fastening insert cannot be rotated with respect to the body of the assembly part around the first direction. This can be advantageous when the mating between the fastening insert and the fastening means requires the fastening insert to remain rotationally fixed. For example, when the fastening means is an industrial screw or a bolt, and the fastening insert is a corresponding nut, a stabilisation of the fastening insert with respect to the fastening means is required. The third form fit provides a reliable rotational stabilisation without additional external means.

In one aspect of the inventive assembly part, the distal end portion can comprise a ledge portion extending beyond the cross-section of the traversing hole in at least one direction orthogonal to the first direction, realizing the first form fit.

When the ledge portion extends beyond the cross-section of the traversing hole in at least one orthogonal direction, the movement of fastening insert in the second direction is blocked at the distal end portion. Thus, the fastening insert can only be inserted in the traversing hole of the assembly part up until the ledge portion. When the fastening insert is inserted up until the ledge portion, the extension of the ledge portion blocks any further insertion in the second direction, realizing the first form fit.

In one aspect of the inventive assembly part, the ledge portion can comprise one or more plane edge surfaces, in particular in parallel to the first direction, and the mating portion can comprise respectively one or more plane mating surfaces, and wherein at least one, in particular each, of the one or more plane edge surfaces mates a plane mating surface, such that the rotational movement of the fastening insert is blocked, realizing the third form fit.

When a plane edge surface of the ledge portion mates a plane mating surface of the mating portion, a rotational movement of the fastening insert around the first direction is blocked, and the third form fit is realized in a convenient manner. In particular, this configuration can advantageously combines the first form fit and the third form fit in the ledge portion, achieving both a blocking of the fastening insert in the second direction and a rotational blocking of the fastening insert around the first direction opposing the second direction.

In one aspect of the inventive assembly part, the fastening insert can comprise a cylindrical, in particular tubular, middle portion, extending along the first direction and linking the proximal end portion to the distal end portion. This provides the fastening insert with a particularly simple and robust structure that is cost-efficient to manufacture. In addition, the cylindrical, in particular tubular, shape of the middle portion allows for a rotationally symmetric insertion of the middle portion in the traversing hole, facilitating the assembly.

In one aspect of the inventive assembly part, the middle portion can have a cross-sectional area at least 1%, in particular between 2% and 10%, smaller than the cross-sectional area of the traversing hole, in particular in a plane orthogonal to the first direction. In this configuration, when the fastening insert is positioned in the traversing hole, the middle portion has a clearance, that is, a distance, with respect to the walls of the traversing hole, and does not abut. Thus, the centring range of the fastening insert in the traversing hole, for example with respect to a through hole of a counterpart, can be further improved.

In one aspect of the inventive assembly part, the fastening insert can be formed, in particular machined, in one piece. This allows for further robustness when the first form fit and/or the second form fit blocks movement of the fastening insert.

In one aspect of the inventive assembly part, at least the proximal end portion of the fastening insert can be formed of metal suitable for plastic deformation, in particular of stainless steel, or of brass or of an aluminium alloy. Preferably, the metal is also resistant to corrosion and suitable for machining. In this configuration, the proximal end portion can be deformed more conveniently, which allows for the first form fit to be realized only after positioning of the fastening insert in the traversing hole. By achieving the second form fit in addition to the first form fit, this allows for a double form fit with a fastening insert in formed in a single piece.

In one aspect of the inventive assembly part, the proximal end portion can comprise a deformation portion extending beyond the cross-section of the traversing hole in at least one direction orthogonal to the second direction, realizing the second form fit.

When the deformation portion extends beyond the cross-section of the traversing hole in at least one orthogonal direction, the movement of the fastening insert in the first direction is blocked at the proximal end portion. Thus, for example, the fastening insert cannot fall out of the traversing hole in the first direction, as it is blocked by the extension of the deformation portion at the entry to the traversing hole.

In one aspect of the inventive assembly part, the proximal end portion can comprise a circumferential groove along an external surface of the fastening insert, in particular along an external surface corresponding to a border of the deformation portion, in particular wherein the groove extends in a plane orthogonal to the first direction.

The groove weakens the structure of the proximal end portion locally, in particular weakens the fastening insert at the border of the deformation portion. Specifically, the groove can focus or concentrate a mechanical force in a first direction on the outline of the groove, facilitate a deformation, such as a bending or a stretching of the fastening insert material, at the groove. The deformation allows for an obtaining of the second form fit after the positioning of the fastening insert.

When the groove extends along a border of the deformation portion, the deformation in the fastening insert can be limited to only the deformation portion. Arranging the groove in a plane orthogonal to the first direction allows for a uniform deformation when a mechanical action, such as a punching of a punch press, is exerted in the first direction.

In one aspect of the inventive assembly part, the circumferential groove can have a depth between 1% and 20%, preferably between 3% and 10%, of the cross-sectional length in a plane orthogonal to the first direction of the fastening insert, in particular of the middle portion. The inventors have found that these groove depths provide an advantageous balance of facilitating deformation without risking damage during deformation.

In one aspect of the inventive assembly part, the wall defining the hollow in the deformation portion can be thinner, in particular at least 50% thinner, preferably at least 75% thinner, than the wall defining the hollow in the remaining portion, in particular the middle portion, of the fastening insert. When the walls of the fastening insert are thinned in the deformation portion, the deformation is further facilitated in the deformation portion while providing a natural barrier to unwanted deformation in the thicker portions.

In one aspect of the inventive assembly part, at least a portion, in particular the entirety, of an internal surface of the deformation portion can have the shape of a frustum of a cone having a vertex centred on the hollow, in particular the shape of a frustum of a right cone having a 45° angle with respect to the vertex.

In this configuration, the internal surface of the deformation portion is particularly suited to receive the movement of a press tool, such as a punch press, as it presses in the first direction. In particular, it is suited to receive the tip of a punch press having a conic shape, in particular a 45° cone shape, and stop the movement of the punch press, at a desired location. For example, the internal surface having the shape of the cone frustum can be arranged at the border of the deformation portion, providing a stopping surface, for a moving pressing tool.

In addition, when the base diameter of the cone shape is larger than a base diameter of a traversing hole, the proximal end portion extends beyond the cross-section of the traversing hole, establishing the second form it. Thus, the conic shape can facilitate a second form fit in a smooth and circumferentially uniform manner.

In one aspect of the inventive assembly part, the fastening insert can comprise an internal thread, in particular for mating with the fastening means received via the proximal end portion. This configuration allows for a reliable fastening of the assembly part to the counterpart by screwing fastening means such as a screw or bolt in the first direction in the fastening insert.

When a screw or bolt is received via the proximal end portion, screwing forces are applied on the distal end portion, and in particular on the first form fit blocking movement of the fastening insert in the second direction. As the screwing forces can be important in case of machine-supported screwing, the ledge portion can be formed to have thicker walls than the deformation portion.

The object of the invention is also achieved with a method of assembling an assembly part, in particular an assembly part according to one of the previous claims, the assembly part comprising a body traversed by a traversing hole, and a fastening insert configured to receive a fastening means in a hollow of the fastening insert along a first direction for the fastening of the assembly part to a counterpart, the fastening insert comprising, in the first direction, a proximal end portion and a distal end portion, the method comprising the steps of:
a) Positioning the fastening insert in the traversing hole, and then
b) Plastically deforming at least a portion of the fastening insert,
wherein step b) realizes a form fit between the fastening insert and the body in the first direction, and in a second direction opposed to the first direction.

This method solves the technical problem of the invention and overcomes the drawbacks of known prior art, by providing a form fit of the fastening insert in the body in two opposing directions. The fastening insert can be securely attached to the body as the friction fit installation is replaced by form fit. This allows for the provision of radial clearance, and reduces the risk of damage to the fastening insert or the body.

In one aspect of the inventive method, in step b), the proximal end portion is deformed such that a form fit between the proximal end portion and the body is realized, said form fit blocking a movement of the fastening insert in the first direction.

In one aspect of the inventive method, step b) comprises an increasing of the extension of the proximal end portion in at least one direction orthogonal to the first direction, in particular such that the cross-sectional area of the proximal end portion is increased in a plane orthogonal to the first direction. In one aspect of the inventive method, the cross-sectional area is increased such that it is larger, in particular 5% to 50% larger, preferably 20% to 35% larger, than the cross-sectional area of the traversing hole, in particular in a plane orthogonal to the first direction.

These aspects provide the advantages of the second form fit described with respect to corresponding features of the inventive assembly here above. In particular, a robust second form fit blocking movement of the fastening insert in the first direction can reliably prevent a falling out of the hole of the fastening insert.

In one aspect of the inventive method, step b) comprises a step of pressing of a tool, in particular a punch press, on the proximal end portion. According to this method, the plastic deformation can be achieved with precise force, speed and localisation of application. This increases the cost-efficiency and effectiveness of the assembling of the assembly part.

In one aspect of the inventive method, the pressing of the tool is centred on the hollow and realized along the first direction. This allows the deformation to be aligned with the hollow receiving the fastening means, and makes sure that the deformation is circumferentially uniform around the first direction and the hollow.

In one aspect of the inventive method, the tip of the tool has the shape of a cone having a vertex centred on the hollow, in particular a right cone having a 45° angle with respect to the vertex. This allows for the tip of the cone to enter the hollow during punching and the conic surface of the cone to press outwardly on the internal surfaces of the hollow, thus increasing the cross-section of the fastening insert. The force is applied circumferentially uniformly, reducing risk of tear during deformation. In particular, when using the 45° cone, the direction of the applied force has an advantageous angle.

In one aspect of the inventive method, comprising a step of:
c) Pressing a stabilising support, in particular a die, against the distal end portion and/or the proximal end portion, wherein step c) is executed before step b). If the stabilising support is pressed against the distal end portion, the fastening insert is prevented from being pushed away when a mechanical action is applied to the fastening insert in the first direction during the deforming step.

In one aspect of the inventive method, step a) comprises a step of inserting the fastening insert in the traversing hole in a second direction opposed to the first direction such that a form fit between the distal end portion and the body is realized, said form fit blocking a movement of the fastening insert in the second direction. The second form fit prevents the fastening insert from falling through when inserted in the second direction in the traversing hole, and in particular counteracts high screwing forces when the screw is machine-screwed in the fastening insert in the first direction.

The object of the invention is further achieved with a method of fastening an assembly part to a counterpart, comprising the steps of
Assembling an assembly part according to any one of aspects of the inventive assembly part described here above;
Positioning a counterpart in contact with the assembly part such that a through hole of the counterpart is centred on the traversing hole and faces an end portion, in particular a proximal end portion, of the fastening insert, and
Mating a fastening means with the fastening insert of the assembly part through the through hole, in particular by screwing.

This method achieves the object of the invention and provides an improved fastening solution overcoming the drawbacks of prior art by using the inventive assembly part described here above.

The invention also relates to a fastening insert suitable for an assembly according to any one of the aspects of the inventive assembly part described here above, the fastening insert being configured to receive a fastening means in a hollow of the fastening insert along a first direction, the fastening insert comprising, in the first direction, a proximal end portion, a middle portion, and a distal end portion, wherein the distal end portion comprises a ledge portion extending beyond the cross-section of the middle portion in at least one direction orthogonal to the first direction, and wherein the proximal end portion comprises a plastically deformable deformation portion.

Unless technically unworkable, the inventive fastening insert can comprise the features already described here above with respect to the fastening insert of the inventive assembly part, and thus benefit from the specified advantages. Some of these features or advantages may thus not be repeated hereunder with respect to the inventive fastening insert.

Further, in one aspect of the inventive fastening insert, the deformation portion can comprise an opening to the hollow and be bowl-shaped, the bowl shape being formed such that a centre axis of the bowl shape is centred on the opening and such that the bowl opens outwardly in the second direction. The inventors have found that a thus arranged bowl-shaped deformation portion is particular suitable to a deformation outward from the centre axis, while sufficiently resisting the risk of tear.

Alternatively, in one aspect of the inventive fastening insert, the deformation portion can comprise an opening to the hollow and have the shape of a hollow hemi-ellipsoid, the hemi-ellipsoid being formed such that a centre axis of the hemi-ellipsoid shape is centred on the opening and such that the bowl opens outwardly in the second direction. This hemi-ellipsoid shape may be formed more easily in the deformation portion, while benefitting from the advantages than the bowl-shaped deformation portion.

In one aspect of the inventive fastening insert, the proximal end portion can comprise a circumferential groove along an external surface of the fastening insert, in particular an external surface corresponding to a border of the deformation portion, in particular wherein the groove extends in a plane orthogonal to the first direction.

As already described, the groove weakens the structure of the proximal end portion locally, in particular at the border of the deformation portion. Specifically, the groove can focus or concentrate a mechanical force in a first direction on the outline of the groove, facilitate a deformation, such as a bending or a stretching of the fastening insert material, at the groove. The deformation allows for an obtaining of the second form fit after the positioning of the fastening insert.

In one aspect of the inventive fastening insert, an internal surface of the deformation portion can have the shape of a frustum of a cone having a vertex centred on the hollow, in particular the shape of a frustum of a right cone having a 45° angle with respect to the vertex.

In this configuration, the internal surface of the deformation portion is particularly suited to receive the movement of a press tool, such as a punch press, as it presses in the first direction. In particular, it is suited to receive the tip of a punch press having a conic shape, in particular a 45° cone shape, and stop the movement of the punch press, at a desired location. For example, the internal surface having the shape of the cone frustum can be arranged at the border of the deformation portion, providing a stopping surface, for a moving pressing tool.

In one aspect of the inventive fastening insert, the middle portion can be cylindrical, in particular a tubular, extends along the first direction and links the proximal end portion to the distal end portion, in particular wherein the fastening insert is formed or machined in one piece in stainless steel, brass, or in an aluminium alloy. This allows for further robustness when the first form fit and/or the second form fit blocks movement of the fastening insert, and the proximal end portion can be deformed more conveniently.

In one aspect of the inventive fastening insert, the circumferential groove can have a depth between 1% and 20%, preferably between 3% and 10%, of the cross-sectional length in a plane orthogonal to the first direction of the fastening insert. The inventors have found these groove depths provide an advantageous balance of facilitating deformation without risking damage during deformation.

In one aspect of the inventive fastening insert, the fastening insert can comprise an internal thread, in particular for mating with the fastening means received via the proximal end portion.

In one aspect of the inventive fastening insert, the wall defining the hollow in the deformation portion can be thinner, in particular at least 50% thinner, preferably at least 75% thinner, than the wall defining the hollow in the remaining portion, in particular in the middle portion, of the fastening insert. When the walls of the fastening insert are thinned in the deformation portion, the deformation is further facilitated in the deformation portion while providing a natural barrier to unwanted deformation in the thicker portions.

In one aspect of the inventive fastening insert, an external surface of the deformation portion can be flush aligned with an external surface of the middle portion. The flush alignment allows for fastening insert to have a similar circumference to the middle portion, thus increasing compactness and fitting through the traversing hole together.

These, as well as other objects and advantages of this invention will be more completely understood and appreciated by careful study of the following more detailed description of the presently preferred exemplary aspects and embodiments of the invention, taken in conjunction with accompanying drawings, in which:
Figure 1A shows a cross-sectional view of a body and two fastening inserts of an assembly part known from prior art, before their assembly.
Figure 1B shows a cross-sectional view of the fastening inserts and the body of the assembly part known from prior art, assembled and fastened a counterpart.
Figure 2 shows a perspective view of a fastening insert according to an embodiment of the invention.
Figure 3A shows a cross-sectional view of an assembly part, in a first stage of an embodiment of a method of assembly according to the invention.
Figure 3B shows the view of Figure 3A in a second stage of the method.
Figure 3C shows a cross-sectional view of the assembly part in a third stage of the method.
Figure 3D shows the view of Figure 3C in a fourth stage of the method.
Figure 3E shows the view of Figure 3C in a fifth stage of the method
Figure 4 illustrates the assembled assembly part with a mating fastening means, before a fastening.
Figure 5A shows a cross-sectional view of an assembly part according to an embodiment of the invention, fastened to a counterpart
Figure 5B shows top plane view of the fastened assembly part of Figure 5A.

In the following descriptive part, identical reference numerals in the text and in the figures refer to identical elements, of which the repeated descriptions will be avoided as a matter of convenience.

An assembly part, a fastening insert and method for assembling the assembly part and for fastening the assembly part to a counterpart according to prior art have already been outlined in the background section, with reference to Figures 1A and 1B. A fastening insert according to an embodiment of the invention will now be described with reference to Figure 2. Figure 2 shows a perspective view of the fastening insert 1.

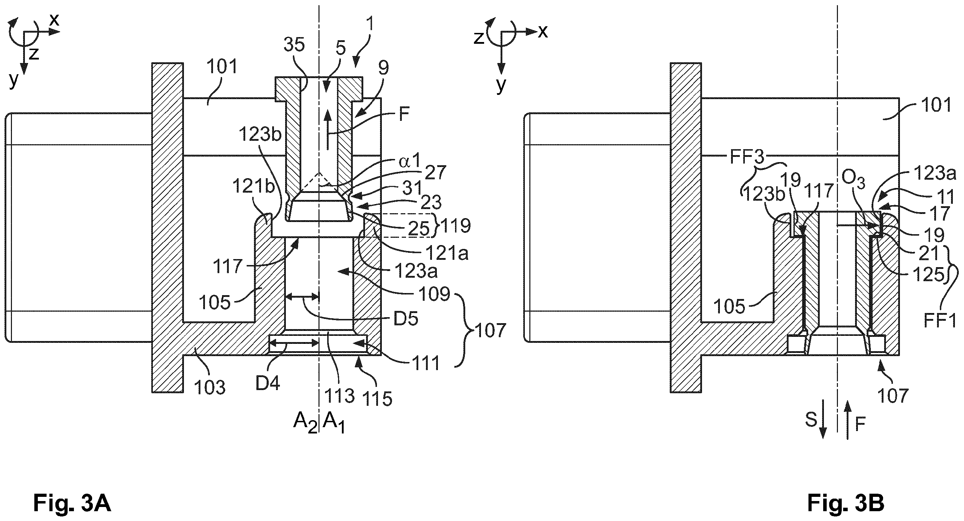

The fastening insert 1 of Figure 2 is suitable for an assembly part according to the invention, for example the assembly part described in the following, with reference to Figures 3A-5B. The fastening insert 1 is also suitable for a method of assembling an assembly part according to the invention, and for a method of fastening an assembly part to a counterpart according to the invention, for example the methods described in the following with reference to Figures 3A-3E, 4, 5A and 5B.

In the present embodiment, the fastening insert 1 is formed in a single, monolithic, piece. Specifically, the fastening insert 1 is machined in brass. However, in advantageous variants, the fastening insert 1 is instead formed out of stainless steel, or out of aluminium.

The monolithic insert body 3 of the fastening insert 1 extends along a first direction F and is hollow. In particular, the insert body 3 of the fastening insert 1 defines a hollow 5. The hollow 5 extends along the first direction F through the fastening insert 1, and defines a centre axis A1 parallel to the first direction F and to a Cartesian direction y.

The insert body 3 comprises, in the first direction F, a proximal end portion 7, a middle portion 9, and a distal end portion 11. The proximal end portion 7, the middle portion 9, and the distal end portion 11 constitute together the monolithic insert body 3.

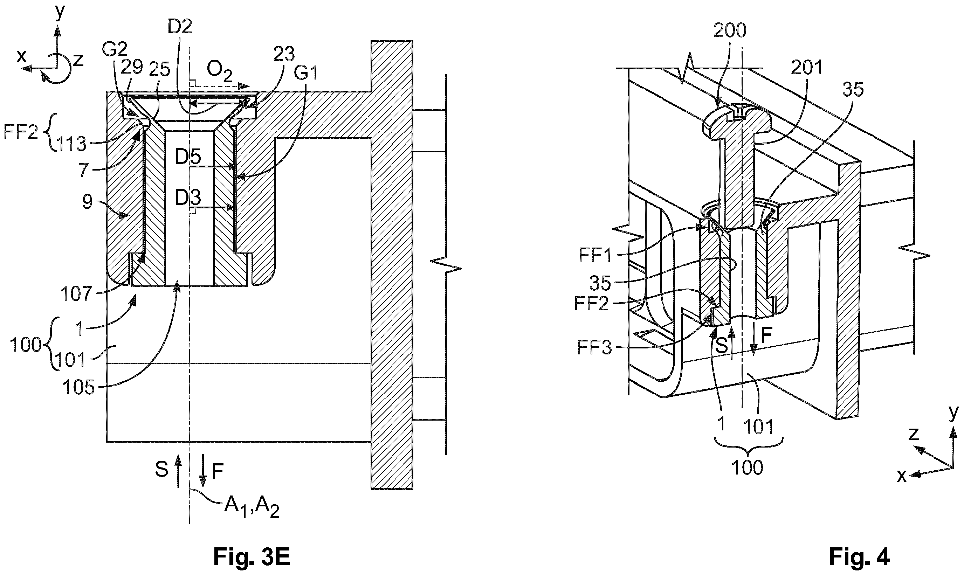

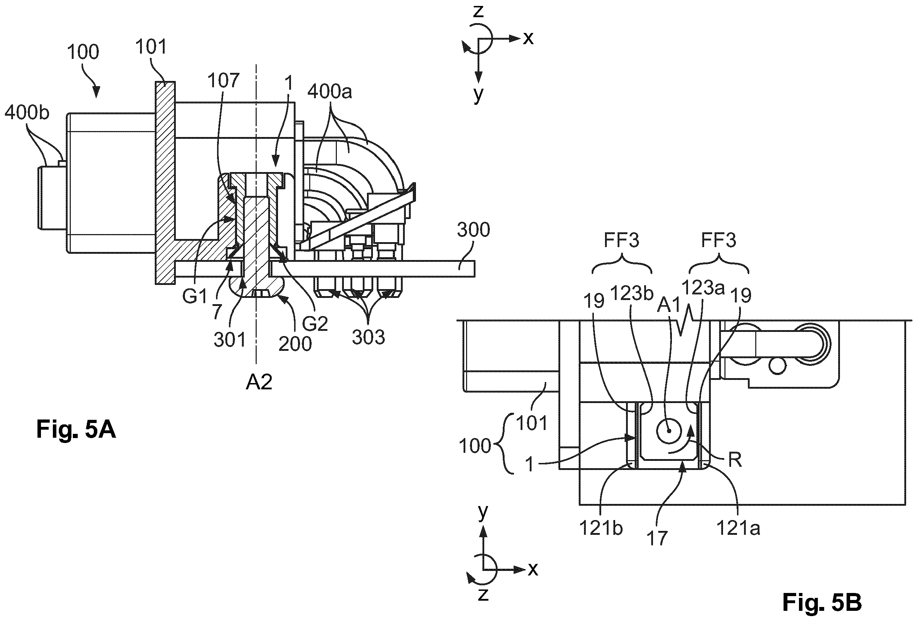

The fastening insert 1 is a nut configured to receive the bolt 200 according to the example shown in Figures 4, 5A and 5B, in the hollow 3 along the first direction F. Specifically, the middle portion 9 is tubular, having a cylindrical external surface 13 and a threaded (not visible) internal surface surrounding a cylindrical portion of the hollow 5. The internal thread of the middle portion 9 is configured to couple with a matching thread 201 of the bolt 200 inserted in the first direction F in the hollow via an circular opening 15 in the proximal end portion 7 of the insert body 3. The opening 15 faces in the second direction S opposed to the first direction F.

The distal end portion 11 comprises a ledge portion 17. The ledge portion 17 has a cuboid shape that protrudes outwardly with respect to the cylindrical external surface 13 of the middle portion 9, in all directions orthogonal to the first direction F, extending beyond the cross-section of the middle portion 9. For example, the ledge portion 17 extends in a first orthogonal direction O1 orthogonal to the first direction F, extending beyond the cross-section of the middle portion 9. That is, the ledge portion 17 extends beyond the circular cross-section of the middle portion 9 projected onto the plane of the first orthogonal direction O1, by the distance D1. The cuboid shape of the ledge portion 17 provides four plane, equivalently sized, edge surfaces 19, parallel to the first direction F, and one interfacial surface 21 facing in the second direction S and linking the edge surfaces 19 to the external surface 13 of the middle portion 9.

The proximal end portion 7 comprises a deformation portion 23, formed at the extremity facing in the second direction S. In this embodiment, the deformation portion 23 is bowl-shaped, the bowl shape having the centre axis A1 as bowl centre axis. The bowl is formed so as to open outwardly in the second direction S, such that the opening of the bowl shape corresponds to the opening 15 of the proximal end portion 7 of the fastening insert 1. In variants of the fastening insert, the deformation portion can, instead of the bowl shape, be arranged in the same way but be formed in the shape of a hollow hemi-ellipsoid, or in the shape of a tulip flower, or in the shape of a barrel.

The bowl-shaped deformation portion 23 has an internal surface 25 surrounding an at least partly bowl-shaped portion of the hollow 5. Figure 2 also shows a conic sub-portion 27 of the internal surface 25 that will be further described with reference to Figures 3A and 3B. The bowl-shaped deformation portion 23 has an external surface 29 that is flush aligned with respect to the externals surface 13 of the middle portion 9.

The proximal end portion 7 further comprises a circumferential groove 31 formed externally on the body 3 of the fastening insert 1, in particular along or adjacent to the external surface 29 of the deformation portion 23. The groove 31 is formed in an area corresponding to the border between the deformation portion 23, or the proximal end portion 7, and the middle portion 9. The groove 31 extends externally in a plane orthogonal to the first direction F and partially defines the bottom of the bowl shape of the deformation portion 23.

The circumferential groove 31 has a depth D2 between 1% and 20%, preferably between 3% and 10%, of the cross-sectional length D3 in a plane orthogonal to the first direction F of the fastening insert 1. For example, when cross-sectional length D3, that is, the diameter of the fastening insert 1 along the middle portion 9, has a length of 3.8mm, the diameter of the fastening insert 1 inside the groove 31 can have a length of 3.5mm, providing for a groove depth 0.15mm, that is, of around 4%. Further, in the embodiment of Figure 2, the groove 31 has a sharp edge 33, however, the groove 31 can also be chamfered or smooth-edged.

A method for assembling an assembly part according to an embodiment of the invention will now be described with reference to Figures 3A to 3E. The assembly part 100 being assembled in the method described in the following comprises the fastening insert 1 of Figure 2, and a body 101.

Figures 3A to 3E show a cross-sectional view of the body 101 and the fastening insert 1 in successive stages of the method for assembling the assembly part 100.

In this example, the assembly part 100 is a connector housing of a modular power connector in a solid-state secondary power distribution (SSPC) system in an aircraft application. For this purpose, the assembly part 100 is configured to be fastened to a counterpart, for example to the printed circuit board 300 shown on Figures 5A and 5B, using the bolt 200, as shown on Figure 4. For simplicity of illustration, the internal thread 35 of the fastening insert 1, as well as the corresponding thread 201 of the bolt 200, has been omitted from Figures 3A to 5B. In the present embodiment, the threads can be assumed to be identical to the threads P3a, P3b described with reference to Figure 1B.

Figure 3A shows the body 101 and the fastening insert 1 of Figure 2 before a first step i) of the method for assembling the assembly part 100. The body 101 comprises a frame portion 103 extending in an x-z plane perpendicular to the first direction F, in which a projection 105 is formed projecting in the first direction F from the frame 103.

In this embodiment, the body 101 is made of metal-plated composite material. Specifically, the composite material of the body 101 is plated first with a copper layer, and second with a nickel layer. The copper under-layer allows for reduction of electromagnetic interference or parasitic effects between the interior and the exterior of the body 101 in the present application of a modular power connector. The nickel over-layer provides anti-corrosion and adherence benefits. As an example, the copper layer and the nickel layer can preferably have a nominal thickness of 25µm.

A traversing hole 107 is formed in the projection 105, with a traversing hole centre axis A2 parallel to the first direction F. The traversing hole 107 comprises a cylindrical main section 109 and a cylindrical opening section 111, wherein the diameter D4 of the opening section 111 is larger than the diameter D5 of the main section 109. Specifically, the diameter D4 is between 10% and 70% preferably between 30% and 50% larger than the diameter D5. The surface 113 at the border between the main section 109 and the opening section 111 is chamfered.

The traversing hole 107 extends, in the first direction F, from a fastening opening 115, in sequence, through the opening section 111 and the main section 109, to an insertion opening 117. The projection 105 further comprises, adjacently and in proximity of the insertion opening 117, a mating portion 119 comprising two wall 121a, 121b. Each wall 121a, 121b is provided with one plane mating surface 123a, 123b, extending in parallel to the centre axis A2 and the first direction F, and facing towards the centre axis A2.

In Figure 3A, the fastening insert 1 is not yet inserted in the traversing hole 107 and is instead outside of the body 101. The opening 15 of the fastening insert 1 faces the insertion opening 117 of the body 101. The centre axis A1 of the fastening insert 1 is coaxial with the centre axis A2 of the traversing hole 107.

In the cross-sectional view of Figure 3A, the fastening insert 1 has an the internal thread 35 at least along the middle portion 9, allowing the mating of the fastening insert 1 with a corresponding bolt 200. In addition, the cross-sectional view shows that the wall of the fastening insert 1 defining the hollow 5 is thinner in the deformation portion 23, in particular more than 50% and even 70% thinner, than the corresponding wall in the middle portion 9. For example, the wall of the fastening insert 1 defining the hollow 5 can have a thickness of 0.24mm in the deformation portion 23, of 0.16mm in the groove 31, and of 0.8mm in the middle portion 9.

Further, the view of Figure 3A shows the partially bowl-shaped internal surface 25 of the deformation portion 23. In particular, the internal surface 25 comprises the non-bowl-shaped internal surface sub-portion 27. The internal surface sub-portion 27 has the shape of a frustum of a right cone having a vertex centred on the hollow 5, that is on the centre axis A1 of the fastening insert 1. In this embodiment, the internal surface sub-portion 27 has the shape of a frustum of a cone having an angle α1 of 45° with respect to the vertex, that is, the centre axis A1.

In a first step i) of the method for assembling the assembly part 100, the fastening insert 1 is positioned in the traversing hole 107. Specifically, the fastening insert 1 is inserted in the traversing hole 107 through the insertion opening 117 along the second direction S. Figure 3B shows the cross-sectional view of Figure 3A after step i) is completed.

The fastening insert 1 is inserted in the traversing hole 107 until the interfacial surface 21 abuts on a corresponding mating interfacial surface 125 of the projection 105, realizing a first form fit FF1 between the ledge portion 17 of the distal end portion 11 and the body 101. In other words, the extension of the ledge portion 17 beyond the cross-section of the traversing hole 107 in a direction orthogonal O3 to the first direction blocks the fastening insert 1 from further movement in the second direction S.

In addition, the fastening insert 1 is inserted in the traversing hole 7 such that shape of the ledge portion 19 matches the mating portion 119, establishing a further (third in the claims) form fit FF3. Specifically, each plane mating surface 123a, 123b of the projection 105 faces or mates a corresponding plane edge surface 19. Thus, a rotational movement of the fastening insert 1 around the first direction F is blocked by the third form fit FF3 between the distal end portion 11 and the mating portion 119.

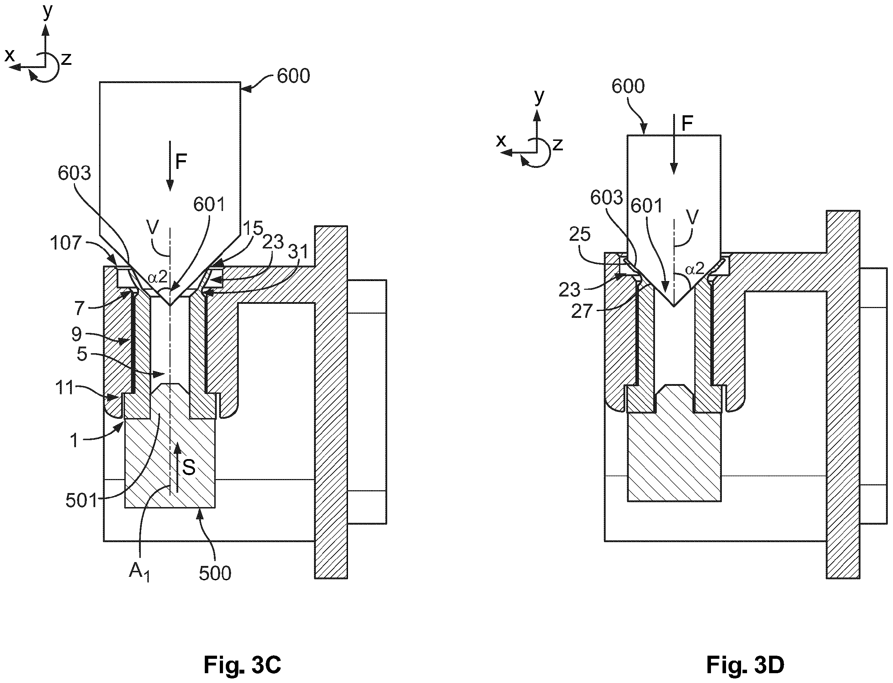

The views of Figures 3C, 3D and 3E described in the following correspond to the view of Figures 3A and 3B, rotated by 180° around the Cartesian z-axis for convenience of illustration.

In a second step ii), a die 500 is pressed, or firmly held, against the distal end portion 11 of the fastening insert 1. This is represented schematically in Figure 3C. The die 500 is pressed in the second direction S against the distal end portion 11 so as to stabilize and support the fastening insert 1 in its position in the traversing hole 107. To further strengthen the stabilizing function of the die 500, the die 500 comprises a die projection 501 inserted in the hollow 5 of the fastening insert, matching the shape of the hollow 5 in the distal end portion 11.

In a third step iii) the proximal end portion 7 is plastically deformed. In particular, a punch press 600 is mechanically pressed in the first direction F on the proximal end portion 7, causing a plastic deformation of said proximal end portion 7. The punch press 600 is represented schematically in Figure 3C. The punch press 600 comprises a conic tip 601 having an angle α2 of 45°with respect to the cone vertex V of the punch press tip 601. The punch press 600 is centred on the hollow 5, that is, the cone vertex V is aligned on the centre axis A1 of the bowl-shaped deformation portion 25.

Figure 3C shows an intermediary stage during step iii), in which the punch press 600 has initiated its travel along first direction F. The punch press 600 is pressed along the first direction F and realizes a plastic deformation of the deformation portion 25. As the outer surface 603 of the conic tip 601 of the punch press 600 moves in the first direction F, it abuts on the deformation portion 23 at the opening 15, pressing it outwards. In this way, the opening 15 is increased in diameter and the bowl shape of the deformation portion 23 is opened and stretched along the out surface 603 of the punch press 600. The circumferential groove 31 and the difference in thickness between deformation portion 11 and middle portion 9 amplify the efficiency, ease and precision of the plastic deformation.

Figure 3D shows a stage of the method after step iii), in which the punch press 600 has reached the end of its travel range along the first direction F, and the plastic deformation of the deformation portion 23 is completed. The outer surface 603 of the cone tip 601 has abutted on the internal surface sub-portion 27 of the deformation portion 23, which has stopped the traveling of the punch press 600. At this stage, the entirety of the bowl-shaped part of the internal surface 25 is plastically deformed to match the conic shape of the cone tip 601 (see also Figure 3E), specifically the right cone shape with a 45° angle with respect to the vertex V. The deformation portion 23 is stretched out along the outer surface 603 of the punch press 600. The diameter of the opening 15 is increased by at least 10% with respect to the diameter prior to the assembly method, as seen when comparing for example Figure 3E and Figure 2.

In variants of the above-described method, a stamping tool or a bending tool could also be used instead of a punching tool to realize the plastic deformation of step iii).

Figure 3E shows a final state of the assembled assembly part 100 according to the invention, in which the punch press 600 and the die 500 are removed and the assembly part 100 is ready to be fastened to a counterpart. The deformation portion 23 is no longer bowl-shaped as shown in Figure 2, and has instead been opened outwards from the hollow 105 to match a conic shape. In particular, the internal surface 25 of the deformation portion 23 has the shape of a frustum of a cone, specifically of the cone of the tip 601 of the punch press 600.

As can be seen on Figure 3E, the deformation portion 23 now extends beyond the cross-section of the traversing hole 107. For example, the extension D6 in at least one direction O2 orthogonal to the second direction S is greater than the corresponding diameter D5 of the traversing hole 107. A movement in the first direction F of the fastening insert 1 is thus blocked by the abutment of the external surface 29 of the deformation portion 23 on the chamfered portion 113 of the body 101. The movement is thus blocked by a second form fit FF2 between the proximal end portion 7 and the body 101. In this way, the plastic deformation of step iii) has realized a form fit between the fastening insert 1 and the body 101 that blocks the fastening insert 1 both in the first direction F and in the opposing second direction.

Figure 3E also shows that in this final state of assembly the external surface 29 of the deformation portion 25 does not directly abut on the chamfered surface portion 113, or any other portion of the body 101. Indeed, as described in the above, the movement of the punch press was not stopped by any part of the body 101, but by the body 3 of the fastening insert 1, in particular by the internal surface sub-portion 27 configured to arrest the punch press 600. Thus, a clearance gap G2 providing axial play along the fastening direction F is realized. The axial play of the clearance gap G2 allows for reduced strain on the insert 1 and the body 101 during handling and transportation, up until the assembly part 100 is fastened to a counterpart.

The middle portion 9 has a cross-sectional area, for example shown in relation to the cross-sectional length D3, at least 1%, in particular between 2% and 10%, smaller than the cross-sectional area, for example shown in relation to the cross-sectional length D5, of the traversing hole 107, in a plane orthogonal to the first direction F. In other words, a clearance gap G1 remains between the external surface 13 of the middle portion 11 and the projection 105, allowing for small lateral movements orthogonally to the first direction F, which can be helpful when fastening the insert with a fastening means.

Figure 4 shows a perspective of the cross-section represented on Figure 3E, with a bolt 200 for illustration purposes outside of the insert 1, prior to insertion. The assembly part 100 is assembled, and the fastening insert 1 is fit to the body 101 by means of the first form fit FF1, the second form fit FF2 and the third form fit FF3, which have been described in the foregoing. In this state, the fastening insert 1 can be mated with the bolt 200 by screwing the bolt 200 in the hollow 5 in the first direction F, matching the internal thread 35 of the insert 1 and the thread 201 of the bolt 200.

A method of fastening an assembly part according to the invention to a counterpart will now be described with reference to Figure 5A. Figure 5A shows the assembled assembly part 100, with the fastening insert 1 described with reference to Figure 2 and the body 101. In this example, the body 101 belonging to a connector housing has been wired with inlet wires 400a and outlet wires 400b. In addition, Figure 5A shows the bolt 200 and a counterpart 300, here a printed circuit board (PCB), to which the inlet wires 400a have been connected at connection points 303.

In a first step, the assembly part 100 is assembled as specified in the assembly method described above. In a second step, the counterpart 300 is positioned in contact with the assembly part 100 such that a through hole 301 of the counterpart 300 is centred on the traversing hole 107 and faces the proximal end portion 7 of the fastening insert 1. That is, the through hole 301 is centred or centrally aligned on the centre axis A2 of the traversing hole 107. In a third step, the bolt 200 is mated with, in particular screwed in, the fastening insert 1 through the through hole 301. In the fastened position, the radial play provided by the clearance gap G1 and the axial play provided by the clearance gap G2 are neutralized by the bolt 200, fastening the counterpart 300 to the assembly part 100.

It is noted that while the embodiments described with respect to the figures have related to the bolt 200 as fastening means, with the fastening insert 1 being a nut, other types of fastening systems are equally applicable. For example, key, pin, lock, screw, or frictional fastening systems for the mating of the fastening insert and the fastening means can be used and still benefit from the advantages of the invention.

In addition, while the thread 201 of the bolt 200 and the thread 35 of the fastening insert 1 are identical to the conventional threads of the inserts P1a, P1b and the bolts P200a, P200b illustrated in Figures 1A and 1B, in variants, the bolt 200 and insert 1 can also comprise alternative thread types. For example, they can be provided with alternative thread pitches, thread depths or thread leads. Further, the threads of the insert 1 and/or of the bolt 200 can comprise integrated self-locking tools or features.

Figure 5B shows the arrangement of Figure 5A in a top plane view, which illustrates the third form fit FF3 between the ledge portion 17 and the mating portion 119. Figure 5B shows the assembly 100 comprising the body 101 and the fastening insert 1. The plane mating surfaces 123a, 123b of the walls 121a, 121b of the mating portion 119, and respective plane edge surface 19 of the ledge portion 17, face each other in close proximity. A rotational movement in the rotational direction R around the centre axis A1 parallel to the fastening direction F is thus blocked.

The described embodiment overcomes the restrictive manufacturing tolerance requirements mentioned in the background section, and provides instead the advantages outlined in the description of the invention. In particular the technical advantages of the various implemented features are entered into effect in the present embodiment. The assembly part, the method of assembly of an assembly part, the method of fastening of an assembly part to a counterpart, and the fastening represent different aspects providing an improved fastening solution.

The features of the various aspects, variants and embodiments of the invention described in the present specification can be freely combined with each other to obtain further embodiments or examples according to the invention.

### Reference numerals

P1a, P1b fastening insert according to prior art
P3a, P3b internal thread of the fastening insert according to prior art
P100 assembly part according to prior art
P101 body of the assembly part according to prior art
P103a, P103b traversing hole in the body
P105a, P105b conic primary section of a traversing hole
P107a, P107b narrowed section of a traversing hole
P109a, P109b chamfered opening section of a traversing hole
P200a, P200b fastening means according to prior art
P300 first counterpart according to prior art
P301 through hole in the first counterpart
P400 second counterpart according to prior art
P401 through hole in the second counterpart
PFa, PFb primary direction of a fastening insert according to prior art
PSa, PSb secondary direction of a fastening insert according to prior art
1 fastening insert
3 insert body
5 hollow
7 proximal end portion
9 middle portion
11 distal end portion
13 external surface of the middle portion
15 opening to the hollow
17 ledge portion
19 plane edge surfaces of the ledge portion
21 interfacial surface of the ledge portion
23 deformation portion
25 internal surface of the deformation portion
27 sub-portion of the internal surface of the deformation portion
29 external surface of the deformation portion
31 circumferential groove
33 sharp edge
35 internal thread of the middle portion
100 assembly part
101 body
103 frame portion
105 projection
107 traversing hole
109 main section of the traversing hole
111 opening section of the traversing hole
113 chamfered border surface
115 fastening opening
117 insertion opening
119 mating portion
121 mating portion walls
123a, 123b plane mating surfaces
125 interfacial surface
200 bolt
201 bolt thread
300 counterpart
301 through hole
303 connection points
400a, 400b wiring
600 punch press
601 tip of the punch press
603 outer surface of the tip of the punch press
500 die
501 die projection
A1 centre axis of the insert
A2 centre axis of the traversing hole
D1 extension of the ledge portion with respect to the middle portion
D2 depth of the groove
D3 cross-sectional length of the middle portion
D4 diameter of the opening section of the traversing hole
D5 diameter of the main section of the traversing hole
D6 extension of the deformation portion in an orthogonal direction
F first direction
S second direction
G1 radial clearance gap
G2 axial clearance gap
R rotational direction
x,y,z Cartesian directions
O1 first orthogonal direction (ledge portion)
O2 second orthogonal direction (deformation portion)
O3 direction orthogonal to the first direction
α1 angle of the fastening insert internal surface cone with respect to its cone vertex
α2 angle of the punch press tip cone with respect to its cone vertex
V vertex of the punch press tip cone
FF1 first form fit
FF2 second form fit
FF3 third form fit

## Claims

1. Assembly part configured to be fastened to a counterpart, comprising
a body (101) traversed by a traversing hole (107), and
a fastening insert (1) configured to receive a fastening means (200) in a hollow (5) of the fastening insert (1) along a first direction (F) for the fastening of the assembly part (100) to the counterpart (300), the fastening insert (1) comprising, in the first direction (F), a proximal end portion (7) and a distal end portion (11),
**characterized in that** the fastening insert (1) is positioned in the traversing hole (5) such that:
a movement of the fastening insert (1) in a second direction (S) opposed to the first direction (F) is blocked by a first form fit (FF1) between the distal end portion (11) and the body (101); and
a movement of the fastening insert (1) in the first direction (F) is blocked by a second form fit (FF2) between the proximal end portion (7) and the body (101).

2. Assembly part according to claim 1, wherein the fastening insert (1) is positioned in the traversing hole (107) such that a rotational movement of the fastening insert (1) around the first direction (F) is blocked by a third form fit (FF3) between the proximal end portion (7) and/or the distal end portion (11) and a corresponding mating portion (119) of the body (101).

3. Assembly part according to claim 1 or 2, wherein the distal end portion (11) comprises a ledge portion (17) extending beyond the cross-section (D5) of the traversing hole (107) in at least one direction (O1, O3) orthogonal to the first direction (F), realizing the first form fit.

4. Assembly part according to any one of claims 1 to 3, wherein the proximal end portion (7) comprises a circumferential groove (31) along an external surface (13, 25) of the fastening insert (1), in particular wherein the groove (31) extends in a plane orthogonal to the first direction (F).

5. Assembly part according to claim 4, wherein the proximal end portion (7) comprises a deformation portion (23) extending beyond the cross-section of the traversing hole (D5) in at least one direction (O2) orthogonal to the first direction (F), realizing the second form fit (FF2).

6. Assembly part according to claim 5, wherein at least a portion (27), in particular the entirety, of an internal surface (25) of the deformation portion (23) has the shape of a frustum of a cone having a vertex (A1) centred on the hollow (5), in particular the shape of a frustum of a right cone having a 45° angle (α1) with respect to the vertex (A1).

7. Method of assembling an assembly part, in particular an assembly part according to one of claims 1 to 6, the assembly part comprising
a body (101) traversed by a traversing hole (107), and
a fastening insert (1) configured to receive a fastening means (200) in a hollow (5) of the fastening insert (1) along a first direction (F) for the fastening of the assembly part (100) to a counterpart (300), the fastening insert (1) comprising, in the first direction (F), a proximal end portion (7) and a distal end portion (11),
the method comprising the steps of:
a) Positioning the fastening insert (1) in the traversing hole (107), and then
b) Plastically deforming at least a portion (23) of the fastening insert (1),
wherein step b) realizes a form fit (FF2) between the fastening insert (1) and the body (101) in the first direction (F), and in a second direction (S) opposed to the first direction (F).

8. Method according to claim 7 wherein in step b), the proximal end portion (7) is deformed such that a form fit (FF2) between the proximal end portion (7) and the body (101) is realized, said form fit (FF2) blocking a movement of the fastening insert (1) in the first direction (F).

9. Method according to claim 7 or 8, wherein step b) comprises an increasing of the extension (D6) of the proximal end portion (7) in at least one direction (O2) orthogonal to the first direction (F), in particular such that the cross-sectional area (D6) of the proximal end portion (7) is increased in a plane orthogonal to the first direction (F).

10. Method for according to any one of claims 7 to 9, wherein step b) comprises a step of pressing of a tool, in particular a punch press (600), on the proximal end portion (7), wherein the pressing of the tool is centred on the hollow (5) and realized along the first direction (F), in particular wherein the tip (601) of the tool has the shape of a cone having a vertex (V) centred on the hollow (5), in particular a right cone having a 45° angle (α2) with respect to the vertex (V).

11. Method of fastening an assembly part to a counterpart, comprising the steps of
Assembling an assembly part (100) according to any one of claims 1 to 6;
Positioning a counterpart (300) in contact with the assembly part (100) such that a through hole (301) of the counterpart (300) is centred on the traversing hole (105) and faces an end portion (7, 11), in particular a proximal end portion (7), of the fastening insert (1), and
Mating a fastening means (200) through the through hole (301) with the fastening insert (1) of the assembly part (100), in particular by screwing.

12. Fastening insert suitable for an assembly part according to any one of claims 1 to 11,
the fastening insert (1) being configured to receive a fastening means (200) in a hollow (5) of the fastening insert (1) along a first direction (F), the fastening insert (1) comprising, in the first direction (F), a proximal end portion (7), a middle portion (9), and a distal end portion (11),
wherein the distal end portion (11) comprises a ledge portion (17) extending beyond the cross-section (D3) of the middle portion (9) in at least one direction (O1) orthogonal to the first direction (F), and
wherein the proximal end portion (7) comprises a plastically deformable deformation portion (23).

13. Fastening insert according to claim 12, wherein the deformation portion (23) comprises an opening (15) to the hollow (5) and is bowl-shaped, the bowl shape being formed such that a centre axis (A1) of the bowl shape is centred on the opening (5) and such that the bowl opens outwardly in the second direction (S).

14. Fastening insert according to claim 12 or 13, wherein an internal surface (27) of the deformation portion (23) has the shape of a frustum of a cone having a vertex (A1) centred on the hollow (5), in particular the shape of a frustum of a right cone having a 45° angle (α1) with respect to the vertex (A1).

15. Fastening insert according to any one of claims 12 to 14, wherein the proximal end portion (7) comprises a circumferential groove (31) along an external surface (13, 29) of the fastening insert (1), in particular an external surface (13, 29) corresponding to a border of the deformation portion (23), in particular wherein the groove (31) extends in a plane orthogonal to the first direction (F).
